# EUROPEAN PATENT SPECIFICATION

(11) **EP 0 504 240 B1**
(45) Date of publication and mention of the grant of the patent: **15.02.1995**
(21) Application number: 91900863.1
(22) Date of filing: 07.12.1990
(51) Int. Cl.: G01S 13/93, H01Q 3/14

(54) **DETECTION DEVICE**
ENTDECKUNGSVORRICHTUNG
DISPOSITIF DE DETECTION

(30) Priority: 09.12.1989 GB 8927905
(43) Date of publication of application: 23.09.1992
(73) Proprietor: LUCAS INDUSTRIES PUBLIC LIMITED COMPANY, Solihull, West Midlands B91 3TX (GB)
(72) Inventor: TRIBE, Raglan, Horatio, Andrew, Harold, Solihull West Midlands B93 9HY (GB)
(74) Representative: Thompson, George Michael
(86) International application number: GB9001913
(87) International publication number: WO9109323

(56) References cited:
- DE-A- 3 630 700
- US-A- 2 085 406
- US-A- 2 716 746
- US-A- 3 448 822
- US-A- 3 749 197
- US-A- 4 062 018
- US-A- 4 158 841
- US-A- 4 791 427
- US-A- 4 833 469
- Patent Abstracts of Japan,vol.13,no.32,(P-817),25 January 1989
- Patent Abstracts of Japan,vol.12,no.345 (P-759),16 September 1988

## Description

This invention relates to a detection device which is intended to be mounted on a vehicle and which can provide a signal indicative of an object in front of the vehicle.

The signal obtained from such a device can be used to modify the operation of one or more of the control systems of the vehicle or it can be used to achieve vehicle braking or it may be used merely to provide a warning to the driver of the vehicle.

It would be possible to use a scanning beam radar system but such a system is expensive and from the point of view of cost, it is desirable to use a fixed beam system. If a fixed beam system is utilised which has a narrow field of view objects which are to the side of the field of view and are a short distance away will be missed and therefore such a system will not be much use in town traffic but would be suitable for motorway use. If the system has a wide field of view it may be too responsive for motorway use but nevertheless ideal for town use.

The object of the invention is to provide a microwave device of the kind and for the purpose specified in a simple and convenient form.

According to the invention detection device for the purpose specified includes a microwave device constructed so as to provide a fixed beam and includes means for varying the divergence of the beam in accordance with the speed of the vehicle.

In the accompanying drawings:-
Figures 1 and 2 are diagrams which show two differing fields of view,
Figure 3 is a block diagram of the system, and
Figures 4 to 10 show modifications to the system.

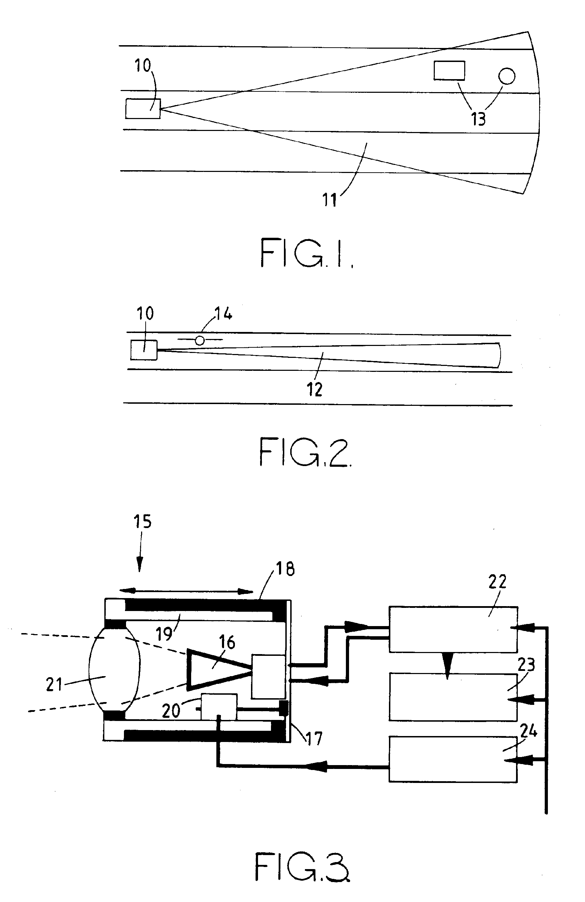

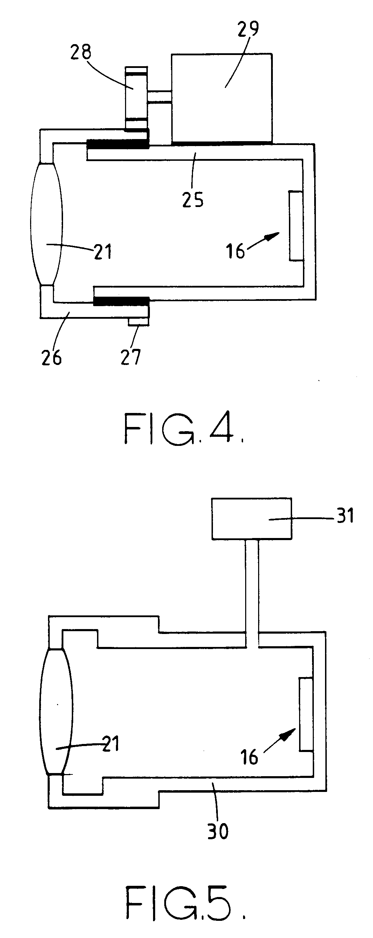

With reference to Figures 1 and 2 a vehicle is indicated at 10 and is fitted with a fixed beam microwave range sensor which produces a microwave beam indicated at 11 in Figure 1 and at 12 in Figure 2. The vehicle is illustrated as travelling in the centre lane of a motorway in Figure 1 and in the near side lane of a dual carriageway in Figure 2. In Figure 1 the beam 11 has a wide divergence and it will be seen to cover objects 13 which are not directly in the path of the vehicle whereas in Figure 2 where the beam is narrow, an object 14 which is close to and in the path of the vehicle lies to one side of the beam and is therefore not detected. It is clear therefore that it would be more appropriate to use the narrow beam when travelling on a motorway at a higher speed and the wider beam when travelling at a lower speed in town traffic. It is proposed therefore to vary the divergence of the beam produced by the sensor in accordance with the speed of the vehicle.

In Figure 3 an adjustable beam microwave sensor is shown at 15 and comprises a microwave transmitter/ receiver device 16 mounted on a base 17 which is secured to one end of an outer tube 18 within which is slidable an inner tube 19. The inner tube mounts at its end remote from the base, a microwave lens 21 conveniently formed from a plastics, and the two tubes can be moved relative to each other by means of a motor 20 conveniently of the stepper type. The motor 20 is mounted on the inner tube 19 and drives a screw threaded shaft which is engaged by a nut mounted on the base 17. Although as shown in Figure 3 the motor and the nut are mounted within the interior of the sensor they can be mounted on the outside of the sensor. The power of the lens 21 is such that the beam which is produced by the sensor 15 diverges and the extent of the divergence can be varied by altering the distance between the lens 21 and the transmitter/receiver 16.

The signal provided by the sensor 15 is processed in a processor 22 which is also supplied with a vehicle speed signal and the signal provided by the processor 22 which will indicate the distance of the object from the vehicle, is applied to the vehicle brake and throttle controller 23. The controller 23 is also supplied with the vehicle speed signal and can take appropriate action to reduce the speed of the vehicle to avoid collision with the object in the path of the vehicle and moving more slowly than the vehicle. The motor 20 is controlled by a control unit 24 which also receives the vehicle speed signal and adjusts the distance between the lens 21 and the transmitter/receiver 16 to provide the appropriate divergence of the beam for the vehicle speed.

The lateral position of the object apart from its range can be determined by varying the divergence of the beam and if for example the beam is increasing in width as soon as the object is detected, the divergence of the beam will provide an indication of the lateral position of the object. Measuring the rate of change of angle from the straight ahead position provides the trajectory of the object across the beam. This is useful for deciding if action has to be taken when going around bends in the road.

An alternative arrangement is seen in Figure 4 in which the inner and outer tubes 25, 26 are provided with an interengaging ball screw thread. The outer tube is also provided with a ring gear 27 the teeth of which are engaged by a pinion 28 driven by a stepper motor 29. The lens in this case is mounted on the outer tube and the transmitter/receiver 16 on the inner tube.

The arrangements shown in Figure 3 and 4 vary the divergence of the beam produced by the sensor by varying the distance between the lens 21 and the transmitter/receiver. However, the divergence of the beam produced by the sensor can be varied by maintaining the distance between the lens and the transmitter/receiver constant and varying the dielectric constant of the medium through which the radiation passes between the lens and the transmitter/receiver.

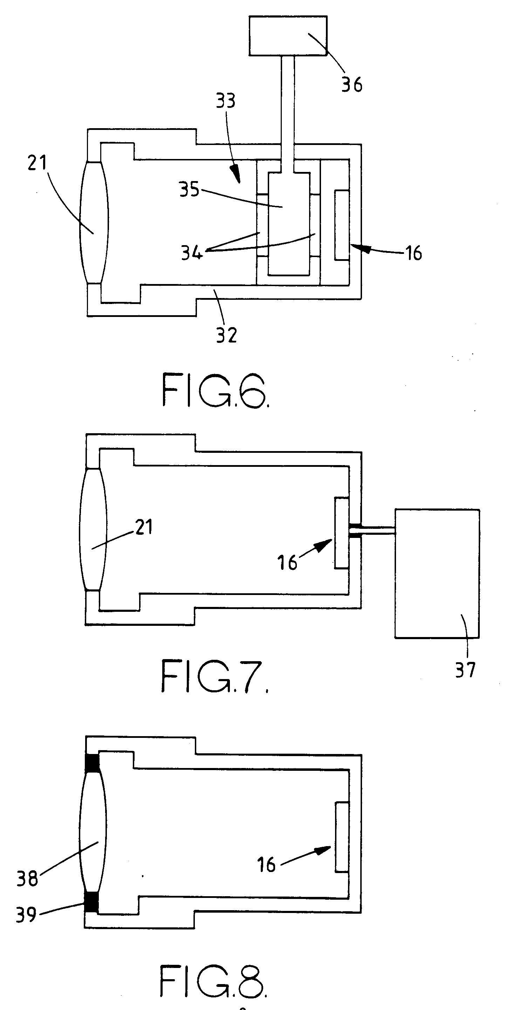

Figure 5 shows the lens 21 and the transmitter/receiver 16 mounted at opposite ends of a hollow casing 30. The pressure of the air or other gas within the casing can be varied. This has the effect of varying the density of the air or other gas and therefore the dielectric constant. The interior of the casing is connected to a variable pressure source 31 the pressure of which is controlled in accordance with the vehicle speed by means of the control unit 24. The pressure of air or other gas may in fact be below atmospheric pressure and in the case of air, the source of air could be the inlet manifold of the engine driving the vehicle.

Figure 6 shows an arrangement in which the casing 32 mounting the lens and the transmitter/receiver 16 contains a cell 33 which contains liquid under pressure. The cell is provided with a pair of glass or like windows 34 which between them define a chamber 35 containing the liquid. The liquid is derived from a source 36 which may for example be a pump forming part of the vehicle braking system in which case the liquid is brake fluid. The fluid may also be taken from the vehicle power steering system or the suspension system. Again the pressure of the liquid in the chamber 35 is controlled in accordance with vehicle speed.

Figure 7 shows the lens 21 and the transmitter/receiver 16 in a fixed relationship and in order to adjust the divergence of the beam the operating frequency of the transmitter/receiver is varied using a suitable control 37.

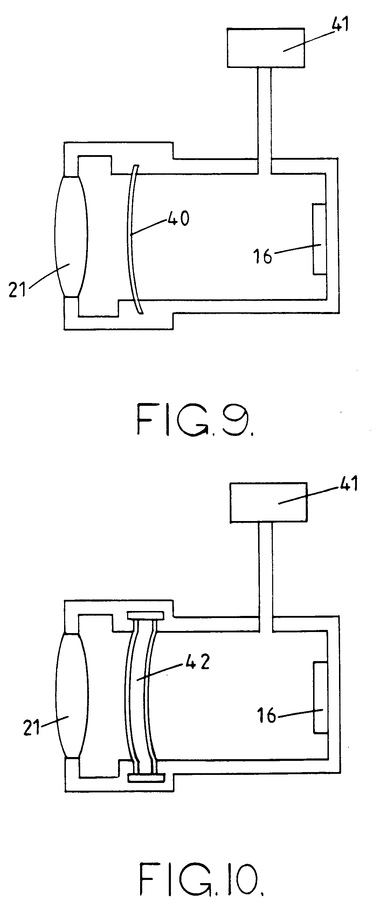

A further way of varying the divergence of the beam is to adjust the focal length of the lens. In Figure 8 the lens 38 and the transmitter/receiver 16 are mounted in fixed relationship with each other. However, interposed between the lens and its mounting is a ring 39 formed from piezo-electric material or a plurality of cells formed from the same material spaced about the lens. When the ring or cells are stressed by varying the voltage applied thereto, deformation of the lens takes place which will alter the focal length of the lens and hence the divergence of the beam.

In the arrangement shown in Figure 9 there is introduced between the transmitter/receiver 16 and the lens 21 a flexible diaphragm 40. The diaphragm may be formed from polythene and is transparent to the radiation beam and interposed between the diaphragm and the lens 21 is a liquid such as vegetable oil based brake fluid or mineral oil. The space between the diaphragm and the transmitter/receiver is connected to a source 41 of air under pressure. The pressure of air can be varied to change the curvature of the diaphragm. The volume of liquid must be able to change to accommodate the change in shape of the diaphragm and this can be achieved by allowing some air or other gas to remain in the space or by providing an expansion cylinder.

In Figure 10 there is interposed between the transmitter/receiver 16 and the lens 21 a fluid filled chamber 42 the walls of which are again transparent to the beam and are flexible. The pressure of air between the chamber 42 and the transmitter/receiver 16 can be varied to cause flexure of the walls of the chamber. The chamber forms as does the diaphragm of Figure 9, a supplementary lens the focus of which can be varied to vary the angle of the divergence of the beam.

Finally, the divergence of the beam may also be adjusted by setting up a standing wave in the lens normal to the microwave waves and adjusting the frequency of the standing wave, the beam width of the microwave signal can be adjusted through interference with the standing wave. The standing wave can be generated in the lens using a transducer in the form of a Braggs cell. The standing wave also has the effect of changing the effective density of the material forming the lens.

## Claims

1. A detection device for mounting on a vehicle and including a microwave device, the detection device providing a signal indicative of an object in front of the vehicle characterised in that the microwave device provides a fixed beam, the detection device further including means for varying the divergence of the beam in accordance with the speed of the vehicle.

2. A detector device according to Claim 1, characterised by a lens positioned relative to the microwave device so that radiation emitted by the microwave device is transmitted through the lens.

3. A detection device according to Claim 2, characterised in that the microwave device is a transmitter/receiver, the lens also transmitting the reflected radiation from an object.

4. A detection device according to Claim 2, characterised in that said means adjusts the distance between the lens and the microwave device.

5. A detection device according to Claim 4, characterised in that said means includes a stepper motor.

6. A detection device according to Claim 2, characterised in that said means adjusts the dielectric constant of medium disposed between the lens and the microwave device.

7. A detection device according to Claim 6, characterised in that said medium is air or other gas and means is provided to vary the pressure of the air or other gas.

8. A detection device according to Claim 6, characterised in that said medium is a liquid contained within a cell located between the lens and the microwave device, means being provided to vary the pressure of said liquid.

9. A device according to Claim 2, characterised in that said means adjusts the focal length of the lens.

10. A detection device according to Claim 9, characterised in that said means includes a piezoelectric element operable to modify the shape of the lens.

11. A detection device according to Claim 2, characterised in that said means produces a standing wave within the lens, the frequency of the standing wave being adjustable.

12. A detection device according to Claim 2, characterised by a variable focus lens interposed between said first mentioned lens and the transmitter/receiver.

13. A detection device according to Claim 12, characterised in that said further lens comprises a fluid filled chamber having flexible side walls, and means for varying the pressure applied against the wall of the chamber to cause flexure of the side walls.

14. A detection device according to Claim 12, characterised in that said further lens comprises a flexible diaphragm interposed between the transmitter/receiver and the first mentioned lens, the space defined between the diaphragm and the lens being occupied by liquid, and means being provided for varying the pressure applied to the face of the diaphragm presented to the transmitter/receiver to vary the curvature of the diaphragm.

## Patentansprüche

1. Erkennungseinrichtung zum Anbringen an einem Fahrzeug mit einer Mikrowelleneinrichtung, wobei die Erkennungseinrichtung ein Signal bereitstellt, welches kennzeichnend für ein Objekt vor dem Fahrzeug ist, dadurch gekennzeichnet, daß
die Mikrowelleneinrichtung einen Feststrahl bereitstellt, wobei die Erkennungseinrichtung weiter ein Mittel zum Variieren der Divergenz des Strahles entsprechend der Fahrzeuggeschwindigkeit aufweist.

2. Erkennungseinrichtung nach Anspruch 1, gekennzeichnet durch eine Linse, die relativ zu der Mikrowelleneinrichtung derart angeordnet ist, daß die durch die Mikrowelleneinrichtung ausgesandte Strahlung durch die Linse hindurch gelassen wird.

3. Erkennungseinrichtung nach Anspruch 2,
dadurch gekennzeichnet, daß
die Mikrowelleneinrichtung ein Sender/Empfänger ist, wobei die Linse auch die von einem Objekt reflektierte Strahlung hindurch läßt.

4. Erkennungseinrichtung nach Anspruch 2,
dadurch gekennzeichnet, daß
das Mittel den Abstand zwischen der Linse und der Mikrowelleneinrichtung einstellt.

5. Erkennungseinrichtung nach Anspruch 4,
dadurch gekennzeichnet, daß
das Mittel einen Schrittmotor aufweist.

6. Erkennungseinrichtung nach Ansprüch 2,
dadurch gekennzeichnet, daß
das Mittel die Dielektrizitätskonstante des Mediums, das zwischen der Linse und der Mikrowelleneinrichtung angeordnet ist, einstellt.

7. Erkennungseinrichtung nach Anspruch 6,
dadurch gekennzeichnet, daß
das Medium Luft oder ein anderes Gas ist und ein Mittel vorgesehen ist zum Ändern des Druckes der Luft oder des anderen Gases.

8. Erkennungseinrichtung nach Anspruch 6,
dadurch gekennzeichnet, daß
das Medium eine Flüssigkeit ist, die in einer Zelle enthalten ist, die sich zwischen der Linse und der Mikrowelleneinrichtung befindet, wobei ein Mittel zum Ändern des Druckes der Flüssigkeit vorgesehen ist.

9. Einrichtung nach Anspruch 2,
dadurch gekennzeichnet, daß
das Mittel die Brennweite der Linse einstellt.

10. Erkennungseinrichtung nach Anspruch 9,
dadurch gekennzeichnet, daß
das Mittel ein piezoelektrisches Element aufweist, das zum Verändern der Form der Linse betreibbar ist.

11. Erkennungseinrichtung nach Anspruch 2,
dadurch gekennzeichnet, daß
das Mittel eine stehende Welle innerhalb der Linse erzeugt, wobei die Frequenz der stehenden Welle einstellbar ist.

12. Erkennungseinrichtung nach Anspruch 2, gekennzeichnet durch eine Linse mit variablem Brennpunkt, welche zwischen die erste erwähnte Linse und den Sender/Empfänger eingebracht ist.

13. Erkennungseinrichtung nach Anspruch 12,
dadurch gekennzeichnet, daß
die weitere Linse eine flüssigkeitsgefüllte Kammer mit flexiblen Seitenwänden und ein Mittel zum Variieren des Druckes, der gegen die Wand der Kammer angelegt wird zum Bewirken einer Verbiegung der Seitenwände aufweist.

14. Erkennungseinrichtung nach Anspruch 12,
dadurch gekennzeichnet, daß
die weitere Linse ein flexibles Diaphragma, welches zwischen den Sender/Empfänger und die erste erwähnte Linse eingebracht ist, wobei der Raum, der zwischen dem Diaphragma und der Linse definiert ist, durch Flüssigkeit besetzt ist und ein Mittel, das vorgesehen ist zum Variieren des Druckes, der an die Fläche des Diaphragmas angelegt wird, die zu dem Sender/Empfänger zeigt, zum Variieren der Krümmung des Diaphragmas, aufweist.

## Revendications

1. Dispositif de détection à monter sur un véhicule et comprenant un dispositif à micro-ondes, le dispositif de détection fournissant un signal indiquant un objet devant le véhicule, caractérisé en ce que le dispositif à micro-ondes émet un faisceau fixe, le dispositif à micro-ondes comprenant en outre un moyen pour faire varier la divergence du faisceau en fonction de la vitesse du véhicule.

2. Dispositif de détection selon la revendication 1, caractérisé par une lentille disposée par rapport au dispositif à micro-ondes de façon que le rayonnement émis par le dispositif à micro-ondes soit transmis à travers la lentille.

3. Dispositif de détection selon la revendication 2, caractérisé en ce que le dispositif à micro-ondes est un émetteur/récepteur, la lentille transmettant également le rayonnement réfléchi par un objet.

4. Dispositif de détection selon la revendication 2, caractérisé en ce que ledit moyen règle la distance entre la lentille et le dispositif à micro-ondes.

5. Dispositif de détection selon la revendication 4, caractérisé en ce que ledit moyen comprend un moteur pas-à-pas.

6. Dispositif de détection selon la revendication 2, caractérisé en ce que ledit moyen règle la constante diélectrique du milieu disposé entre la lentille et le dispositif à micro-ondes.

7. Dispositif de détection selon la revendication 6, caractérisé en ce que ledit milieu est de l'air ou un autre gaz et qu'un moyen est prévu pour faire varier la pression de l'air ou de l'autre gaz.

8. Dispositif de détection selon la revendication 6, caractérisé en ce que ledit milieu est un liquide contenu dans une cellule située entre la lentille et le dispositif à micro-ondes, un moyen étant prévu pour faire varier la pression dudit liquide.

9. Dispositif selon la revendication 2, caractérisé en ce que ledit moyen règle la distance focale de la lentille.

10. Dispositif de détection selon la revendication 9, caractérisé en ce que ledit moyen englobe un élément piézoélectrique qui peut être actionné pour modifier la forme de la lentille.

11. Dispositif de détection selon la revendication 2, caractérisé en ce que ledit moyen produit une onde stationnaire dans la lentille, la fréquence de l'onde stationnaire étant réglable.

12. Dispositif de détection selon la revendication 2, caractérisé par une lentille à distance focale variable interposée entre ladite première lentille et l'émetteur/récepteur.

13. Dispositif de détection selon la revendication 12, caractérisé en ce que ladite autre lentille comprend une chambre remplie de liquide ayant des parois latérales flexibles, et un moyen pour faire varier la pression appliquée aux parois de la chambre pour provoquer la flexion desdites parois latérales.

14. Dispositif de détection selon la revendication 12, caractérisé en ce que ladite autre lentille comporte un diaphragme flexible interposé entre l'émetteur/récepteur et ladite première lentille, l'espace défini entre le diaphragme et la lentille étant occupé par un liquide et un moyen étant prévu pour faire varier la pression appliquée à la face du diaphragme tournée vers l'émetteur/récepteur afin de faire varier la courbure du diaphragme.
